# EUROPÄISCHE PATENTANMELDUNG

(11) **EP 4 105 626 A1**
(43) Veröffentlichungstag der Anmeldung: **21.12.2022**
(21) Anmeldenummer: 22178934.0
(22) Anmeldetag: 14.06.2022
(51) Int. Cl.: G01L 1/24, G01B 11/16, G01L 1/25, G01L 5/22

(54) **VORRICHTUNG UND VERFAHREN ZUR GENERIERUNG VON MINDESTENS EINEM PARAMETER BEI MINDESTENS EINER GELENKEINRICHTUNG**

(30) Priorität: 15.06.2021 DE 102021115399
(71) Anmelder: IAV GmbH Ingenieurgesellschaft Auto und Verkehr, 10587 Berlin (DE)
(72) Erfinder: Bruhn, Sven, 25551 Hohenlockstedt (DE)
(74) Vertreter: Wanzek, Jan

(57) **Zusammenfassung**

Die Erfindung betrifft eine Vorrichtung und ein Verfahren zur Generierung von mindestens einem Parameter bei mindestens einer Gelenkeinrichtung mit mindestens einem ersten Gelenkteil und mindestens einem zweiten Gelenkteil.

Das mindestens eine erste Gelenkteil weist mindestens eine erste Gelenkfläche auf.

Das mindestens eine zweite Gelenkteil weist mindestens eine zweite Gelenkfläche auf.

Die mindestens eine erste Gelenkfläche und/oder die mindestens eine zweite Gelenkfläche und/oder das mindestens eine erste Gelenkteil und/oder das mindestens eine zweite Gelenkteil weisen mindestens ein photoelastisches Material auf.

Die Vorrichtung weist eine Einrichtung zur Erzeugung mindestens eines polarisierten Lichteintrittssignals, welches das mindestens eine photoelastische Material empfangen kann, auf.

Die Vorrichtung weist eine Einrichtung zum Empfang mindestens eines polarisierten Lichtaustrittssignals auf.

Die Vorrichtung weist ein elektronisches Datenverarbeitungssystem zur Generierung von mindestens einem Parameter anhand des mindestens einen polarisierten Lichtaustrittssignals auf.

## Beschreibung

### Technisches Gebiet

Die Erfindung betrifft eine Vorrichtung und ein Verfahren zur Generierung von mindestens einem Parameter bei mindestens einer Gelenkeinrichtung.

### Stand der Technik

Die DE 696 14 363 T2 beschreibt einen Drehmomentsensor zur Verwendung in Verbindung mit einem Antriebssystem aufweisend ein nachgiebiges Teil.

Der Drehmomentsensor umfasst eine Lichtquelle zum Erzeugen eines ersten Lichtsignals, ein photoelastisches Teil, das dazu ausgelegt ist, das erste Lichtsignal zu empfangen und ein phasenverschobenes Lichtsignal auf der Grundlage eines Biegungsbetrages im nachgiebigen Teil zu erzeugen, und einen Detektor zum Empfang des phasenverschobenen zweiten Lichtsignals und zum Erzeugen eines elektrischen Signals auf der Grundlage des phasenverschobenen zweiten Lichtsignals zur Erzeugung eines Drehmomentsignals, das den Biegungsbetrag im nachgiebigen Teil repräsentiert.

Das photoelastische Teil ist auf dem nachgiebigen Teil angeordnet.

Das phasenverschobene zweite Lichtsignal repräsentiert ein zweidimensionales optisches Phasenverschiebungsmuster, welches eine zweidimensionale Funktion der Position auf der Oberfläche des photoelastischen Teils ist.

Eine Einrichtung ist dazu vorgesehen, das optische Phasenverschiebungsmuster in ein zweidimensionales Intensitätsmuster in Form einer Intensitätsmatrix umzusetzen, welche zur direkten Eingabe in ein neuronales Netzwerk ausgelegt ist, welches im Drehmomentsensor vorgesehen ist und als Erzeuger für eine Schätzfunktion zur Ausführung einer direkten Abbildung von der Intensitätsmatrix auf ein Drehmomentausgangssignal trainiert worden ist. Das neuronale Netzwerk erzeugt das Drehmomentausgangssignal auf der Grundlage des ersten modifizierten Lichtsignals.

Technische Gelenke werden üblicherweise mit Achsen, Bolzen und Führungen versehen, die wiederum entlang ihrer Achsen und Führungen mit Positions- und Kraftsensorik ausgestattet werden können.

In der Regel können aus Kosten- und Bauraumgründen nur wenige, diskrete Sensoren zur Kraft- und Positionserfassung in solche technischen Gelenkeinrichtungen gebracht werden. Diese wenigen, diskret erfassten Zustände werden dann in der Regel im Rahmen klassischer Regelungskonzepte (Zustandsregler, Beobachter, PID, IMC etc.) verwendet.

Eine natürlich wirkende Motorik ist bei bionischen Robotern bekannt.

Geländegängige sowie zivilisationstaugliche Laufmaschinen sind nur schwer darstellbar (nicht energie- und verschleißoptimal, wenig propriozeptive Steuerungsarchitekturen, begrenztes Bewegungspotential).

Im Vergleich zu biologischen Gelenkentwürfen weisen einfache Gelenkkonstruktionen oft nur einen begrenzten Bewegungsbereich auf.

Aufwendige herkömmlich gesteuerte Gelenkkonstruktionen sind in der Regel sehr kostentreibend.

### Aufgabe der Erfindung

Der Erfindung liegt die Aufgabe zugrunde, eine Vorrichtung und ein Verfahren zur Generierung von mindestens einem Parameter bei mindestens einer Gelenkeinrichtung bereitzustellen, die eine Zustandserfassung der mindestens einen Gelenkeinrichtung ermöglichen.

### Lösung der Aufgabe

Die Aufgabe wird durch eine Vorrichtung gemäß Anspruch 1 und ein Verfahren gemäß Anspruch 4 gelöst.

### Vorteile der Erfindung

Die erfindungsgemäße Vorrichtung umfasst eine Gelenkeinrichtung, beispielsweise ein technisches Gelenk (Kreuzgelenk, Drehgelenk, Drehschubgelenk, Kugelgelenk) oder ein anatomisches Gelenk (Kugelgelenk, Eigelenk, Scharniergelenk, Sattelgelenk, Zapfengelenk), mit einem ersten Gelenkteil und einem zweiten Gelenkteil.

Das mindestens eine erste Gelenkteil weist mindestens eine erste Gelenkfläche auf.

Das mindestens zweite Gelenkteil weist mindestens eine zweite Gelenkfläche auf.

Die mindestens eine erste Gelenkfläche und/oder die mindestens eine zweite Gelenkfläche weisen mindestens ein photoelastisches Material auf.

Das mindestens eine photoelastische Material kann auf der jeweiligen Gelenkfläche angeordnet sein, oder die mindestens eine erste und/oder die mindestens eine zweite Gelenkfläche bestehen zumindest teilweise aus mindestens einem photoelastischen Material.

Weiterhin besteht die Möglichkeit, dass das mindestens eine photoelastische Material innerhalb des mindestens einen ersten Gelenkteils und/oder des mindestens einen zweiten Gelenkteils integriert ist.

Mittels der Integration ist das photoelastische Material keinem Flächenverschleiß infolge Reibung ausgesetzt.

Der Krafteinfluss verformt hierbei die gesamte Gelenkeinrichtung sowie das integrierte photoelastische Material.

Hierbei muss gewährleistet sein, dass das photoelastische Material polarisiertes Licht von außerhalb der Gelenkeinrichtung empfangen kann, und dass von dem photoelastischen Material austretende Lichtsignal von außerhalb der Gelenkeinrichtung empfangen werden kann.

Das photoelastische Material ist unter Belastung doppelbrechend, d.h. das Material ist unter Spannung anisotrop und spannungsfrei isotrop.

Grundlage bildet die Eigenschaft vieler optisch isotroper Materialien, bei mechanischen Spannungen doppelbrechend zu werden.

Photoelastizität beschreibt Änderungen der optischen Eigenschaften eines Materials unter mechanischer Verformung.

Die spannungsoptisch aktiven Gelenkflächen/-teile sind direkt belastet/tragend.

Weiterhin umfasst die Vorrichtung eine Einrichtung zur Erzeugung mindestens eines polarisierten Lichteintrittssignals, welches das mindestens eine photoelastische Material empfangen kann.

Die Einrichtung zur Erzeugung des mindestens einen polarisierten Lichteintrittssignals kann eine Lichtquelle zur Erzeugung eines Lichtsignals und einen Polarisationsfilter, welchen das erzeugte Lichtsignal durchläuft, aufweisen.

Die Einrichtung zur Erzeugung mindestens eines polarisierten Lichteintrittssignals kann an der mindestens einen ersten oder zweiten Gelenkfläche angeordnet sein.

Zudem umfasst die Vorrichtung eine Einrichtung zum Empfang mindestens eines polarisierten Lichtaustrittssignals.

Unter Krafteinwirkung (mechanische Belastung) auf die Gelenkeinrichtung erzeugt das photoelastische Material eine Drehung der Polarisationsebene.

Diese Drehung der Polarisationsebene sorgt bei einem Durchtritt durch ausgerichtete Polfilter für helles und dunkles Licht.

Die Einrichtung zum Empfang mindestens eines polarisierten Lichtaustrittssignals kann einen verdrehten Polarisationsfilter, welchen das Lichtaustrittssignal durchläuft, und einen Detektor, welcher das den verdrehten Polarisationsfilter durchlaufende polarisierte Lichtaustrittssignal empfängt, aufweisen.

Der Detektor ist beispielsweise eine Kamera.

Die Einrichtung zum Empfang mindestens eines polarisierten Lichtaustrittssignals kann an der mindestens einen ersten oder zweiten Gelenkfläche angeordnet sein.

Das photoelastische Material kann bei einer Gelenkeinrichtung sowohl in einer Durchlichtanordnung als auch in einer reflektierenden Anordnung verwendet werden.

In einer Durchlichtanordnung durchscheint das polarisierte Licht das photoelastische Material, d.h. auf einer ersten Seite des photoelastischen Materials tritt das Licht ein und auf einer zweiten Seite, die der ersten Seite gegenüberliegt, tritt das Licht aus.

In einer reflektierenden Anordnung tritt das Licht auf einer ersten Seite des photoelastischen Materials ein, wird an einer gegenüberliegenden zweiten Seite reflektiert und tritt anschließend an der ersten Seite aus.

Weiterhin umfasst die Vorrichtung ein elektronisches Datenverarbeitungssystem zur Generierung von mindestens einem Parameter anhand des mindestens einen polarisierten Lichtaustrittssignals.

Der mindestens eine Parameter kann beispielsweise Kräfte in alle räumlichen Richtungen, Verdrehsituationen, Schersituationen, Positionen, Bewegungen und oder transiente Stoßsituationen sein.

Mittels des mindestens einen Parameters ist eine Zustandserfassung (Kräfte, Positionen (statische oder dynamische räumliche Ausrichtungen)) sowie eine Lageregelung/-steuerung der Gelenkeinrichtung möglich.

Mittels des erfindungsgemäßen Verfahrens werden zur Generierung von mindestens einem Parameter bei mindestens einer Gelenkeinrichtung mit mindestens einem ersten Gelenkteil und mindestens einem zweiten Gelenkteil, zumindest folgende Verfahrensschritte ausgeführt:
- Aussenden mindestens eines polarisierten Lichteintrittssignals, welches von mindestens einem photoelastischen Material empfangen werden kann,
   wobei das mindestens eine erste Gelenkteil mindestens eine erste Gelenkfläche aufweist, und
   wobei das mindestens eine zweite Gelenkteil mindestens eine zweite Gelenkfläche aufweist, und
   wobei die mindestens eine erste Gelenkfläche und/oder die mindestens eine zweite Gelenkfläche und/oder das mindestens eine erste Gelenkteil und/oder das mindestens eine zweite Gelenkteil das mindestens eine photoelastische Material aufweist;
- Empfang mindestens eines polarisierten Lichtaustrittssignals;
- Generierung von mindestens einem Parameter anhand des mindestens einen polarisierten Lichtaustrittssignals mittels eines elektronischen Datenverarbeitungssystems.

In einer vorteilhaften Ausführungsform der Vorrichtung umfasst das elektronische Datenverarbeitungssystem ein künstliches neuronales Netz zur Generierung von mindestens einem Parameter.

Die neuronal getriebene Zustandsverarbeitung kann dann im Rahmen einer Bewegungssteuerung/-regelung, beispielsweise auf Basis neurodynamischer Module zur Gelenkstabilisierung und Umsetzung von Bewegungsabläufen erfolgen.

In einer weiteren vorteilhaften Ausführungsform umfasst die Vorrichtung mindestens einen Körperschallaufnehmer zum Empfang von mindestens einem Köperschallsignal der Gelenkeinrichtung, wobei das mindestens eine Körperschallsignal an das elektronische Datenverarbeitungssystem zur Generierung von mindestens einem Parameter übertragen werden kann.

Der Körperschallaufnehmer kann beispielsweise als miniaturisierte MEMS (micro-eletromechanical systems) - oder Elektretkapsel realisiert werden.

Der Körperschallaufnehmer kann aufgrund einer dynamischen Krafteinwirkung auf die Gelenkeinrichtung den resultierenden Körperschall empfangen und an das elektronische Datenverarbeitungssystem weiterleiten.

In einer vorteilhaften Ausführungsform des Verfahrens wird zur Generierung von mindestens einem Parameter zusätzlich mindestens ein künstliches neuronales Netz eingesetzt.

Die neuronal getriebene Zustandsverarbeitung kann dann im Rahmen einer Bewegungssteuerung/-regelung, beispielsweise auf Basis neurodynamischer Module zur Gelenkstabilisierung und Umsetzung von Bewegungsabläufen erfolgen.

In einer weiteren vorteilhaften Ausführungsform des Verfahrens wird zur Generierung von mindestens einem Parameter zusätzlich mindestens ein Körperschallsignal der Gelenkeinrichtung verwendet.

Der Körperschallaufnehmer kann beispielsweise als miniaturisierte MEMS (micro-eletromechanical systems) - oder Elektretkapsel realisiert werden.

Der Körperschallaufnehmer kann aufgrund einer dynamischen Krafteinwirkung auf die Gelenkeinrichtung den resultierenden Körperschall empfangen und an das elektronische Datenverarbeitungssystem weiterleiten.

Der elektronische Teil der Sensorik ist nicht mit beweglichen Teilen der Gelenkeinrichtung verbunden.

Dadurch ist die erfindungsgemäße Vorrichtung robust, dennoch sehr integriert und klein ausführbar (keine beweglichen Kabel an rotierenden Wellen, kein Achskontakt nötig, keine Translation von kabelverbundenen Sensoren).

Eine Sensorintegration (Zustandserfassung) in den Mechanikteil der Gelenkeinrichtung wird erfindungsgemäß stark erleichtert, da "mit Abstand" berührungslos von außen geblickt und gehört werden kann.

Dadurch ergibt sich ein sehr kostengünstiger Aufbau, der völlig neue konstruktive Freiheitsgrade bietet (proprioceptive Systemzustandserfassung, Einbettung in neuronale Bewegungssteuerungskonzepte, neuronale Gelenkstabilisierung mit den Freiheitsgraden und der motorischen Eleganz eines biologischen Gelenkentwurfs).

Dadurch werden dann bionische Gelenkkonstruktionen möglich, die keine klassischen Achs- und Führungsbestandteile mehr benötigen, und im Rahmen von neuronalen, proprioceptiven Regelungs- / Steuerungskonzepten stabilisiert werden können, was mit klassischen Regelstrukturen wegen der zu berücksichtigenden Messkanäle nahezu undenkbar erscheint.

Hochbewegliche, kostengünstige bionische Robotergelenke mit prorioceptiver Gelenkzustandserfassung können erfindungsgemäß im Rahmen von neuronal getriebener Bewegungssteuerung ideal eingebettet werden und ermöglichen eine verschleiß- und energieoptimale natürlich wirkende Robotermotorik.

Erfindungsgemäß ist eine Realisierung von beispielsweise Arm- / Beinprothesen mit natürlich wirkender Motorik und großem Bewegungsfreiraum möglich.

Weiterhin ist erfindungsgemäß ein Aufbau von co-working tauglichen Robotern möglich, da keine mechanisch "harten" Gelenkverbindungen (Bolzen, Wellen, Schienen) notwendig sind, um ein Gelenk zu stabilisieren.

Dadurch sind "weich" wirkende, stoßabsorbierende, sich stetig neu justierende Gelenkkonstruktionen möglich.

## Patentansprüche

1. Vorrichtung zur Generierung von mindestens einem Parameter bei mindestens einer Gelenkeinrichtung mit mindestens einem ersten Gelenkteil und mindestens einem zweiten Gelenkteil,
wobei das mindestens eine erste Gelenkteil mindestens eine erste Gelenkfläche aufweist, und
wobei das mindestens eine zweite Gelenkteil mindestens eine zweite Gelenkfläche aufweist, und
wobei die mindestens eine erste Gelenkfläche und/oder die mindestens eine zweite Gelenkfläche und/oder das mindestens eine erste Gelenkteil und/oder das mindestens eine zweite Gelenkteil mindestens ein photoelastisches Material aufweist, und
wobei die Vorrichtung eine Einrichtung zur Erzeugung mindestens eines polarisierten Lichteintrittssignals, welches das mindestens eine photoelastische Material empfangen kann, aufweist, und
wobei die Vorrichtung eine Einrichtung zum Empfang mindestens eines polarisierten Lichtaustrittssignals aufweist, und
wobei die Vorrichtung ein elektronisches Datenverarbeitungssystem zur Generierung von mindestens einem Parameter anhand des mindestens einen polarisierten Lichtaustrittssignals aufweist.

2. Vorrichtung nach Anspruch 1, **dadurch gekennzeichnet, dass** das elektronische Datenverarbeitungssystem ein künstliches neuronales Netz zur Generierung von mindestens einem Parameter umfasst.

3. Vorrichtung nach Anspruch 1 oder 2, **dadurch gekennzeichnet, dass** die Vorrichtung mindestens einen Körperschallaufnehmer zum Empfang von mindestens einem Köperschallsignal der Gelenkeinrichtung umfasst, wobei das mindestens eine Körperschallsignal an das elektronische Datenverarbeitungssystem zur Generierung von mindestens einem Parameter übertragen werden kann.

4. Verfahren zur Generierung von mindestens einem Parameter bei mindestens einer Gelenkeinrichtung mit mindestens einem ersten Gelenkteil und mindestens einem zweiten Gelenkteil, **gekennzeichnet durch** zumindest folgende Verfahrensschritte:
• Aussenden mindestens eines polarisierten Lichteintrittssignals, welches von mindestens einem photoelastischen Material empfangen werden kann,
wobei das mindestens eine erste Gelenkteil mindestens eine erste Gelenkfläche aufweist, und
wobei das mindestens eine zweite Gelenkteil mindestens eine zweite Gelenkfläche aufweist, und
wobei die mindestens eine erste Gelenkfläche und/oder die mindestens eine zweite Gelenkfläche und/oder das mindestens eine erste Gelenkteil und/oder das mindestens eine zweite Gelenkteil das mindestens eine photoelastische Material aufweist;
• Empfang mindestens eines polarisierten Lichtaustrittssignals;
• Generierung von mindestens einem Parameter anhand des mindestens einen polarisierten Lichtaustrittssignals mittels eines elektronischen Datenverarbeitungssystems.

5. Verfahren nach Anspruch 4, **dadurch gekennzeichnet, dass** zur Generierung von mindestens einem Parameter zusätzlich mindestens ein künstliches neuronales Netz eingesetzt wird.

6. Verfahren nach Anspruch 4 oder 5, **dadurch gekennzeichnet, dass** zur Generierung von mindestens einem Parameter zusätzlich mindestens ein Körperschallsignal der Gelenkeinrichtung verwendet wird.
